# EUROPÄISCHE PATENTANMELDUNG

(11) **EP 4 528 083 A1**
(43) Veröffentlichungstag der Anmeldung: **26.03.2025**
(21) Anmeldenummer: 24199276.7
(22) Anmeldetag: 09.09.2024
(51) Int. Cl.: F01M 1/02, F01M 1/10, F01M 11/00, F01M 1/12

(54) **SCHMIERMITTELVERSORGUNGSSYSTEM FÜR EIN KRAFTFAHRZEUG**

(30) Priorität: 19.09.2023 AT 507602023
(71) Anmelder: KTM AG, 5230 Mattighofen (AT)
(72) Erfinder: LUTSCH, Maria, 5261 Helpfau-Uttendorf (AT); FAISTAUER, Sebastian, 5162 Obertrum am See (AT)
(74) Vertreter: Torggler & Hofmann Patentanwälte - Innsbruck

(57) **Zusammenfassung**

Schmiermittelversorgungssystem für ein, insbesondere einspuriges, Kraftfahrzeug (20), umfassend
- wenigstens eine Schmiermittelpumpe (2, 3), welche dazu ausgebildet ist, ein Schmiermittel zur Schmierung von Motorkomponenten (9, 10, 11, 12, 14) in zumindest einem Schmiermittelkreislauf des Kraftfahrzeuges (20) zu fördern und
- optional einen Schmiermittelfilter (4), welcher dazu ausgebildet ist, das im Schmiermittelkreislauf geförderte Schmiermittel zu filtrieren,
wobei
- der Schmiermittelfilter (4) unmittelbar an die wenigstens eine Schmiermittelpumpe (2, 3) anschließt und/oder
- eine gedachte Fortsetzung einer Pumpenwelle (5) der wenigstens einen Schmiermittelpumpe (2, 3) den Schmiermittelfilter (4) durchsetzt und/oder
- wenigstens zwei Schmiermittelpumpen (2, 3) vorgesehen sind, wobei die wenigstens zwei Schmiermittelpumpen (2, 3) durch eine gemeinsame Pumpenwelle (5) angetrieben sind.

## Beschreibung

Die vorliegende Erfindung betrifft ein Schmiermittelversorgungssystem für ein, insbesondere einspuriges, Kraftfahrzeug mit den Merkmalen des Oberbegriffs des Anspruchs 1.

Gattungsgemäße Schmiermittelversorgungssysteme umfassen
- wenigstens eine Schmiermittelpumpe, welche dazu ausgebildet ist, ein Schmiermittel zur Schmierung von Motorkomponenten in zumindest einem Schmiermittelkreislauf des Kraftfahrzeuges zu fördern und
- optional einen Schmiermittelfilter, welcher dazu ausgebildet ist, das im Schmiermittelkreislauf geförderte Schmiermittel zu filtrieren.

Bei bekannten Systemen des Standes der Technik wird ein Schmiermittel an die unterschiedlichen Motorkomponenten gefördert, welches dazu dient, eine Reibung zwischen den Motorkomponenten während des laufenden Betriebes zu verringern und somit einen Verschleiß zu reduzieren.

So wird Schmiermittel beispielsweise dazu verwendet,
- zwischen einem Kolben und einem Zylinder (oder einer Zylinderlaufbuchse) eine Schmierung durchzuführen,
- ein Getriebe zu schmieren, oder
- andere Komponenten des einspurigen Kraftfahrzeuges mit einer nötigen Schmierung zu versorgen.

Nachdem das Schmiermittel dazu verwendet wurde, eine Schmierung umzusetzen, sammelt sich dieses zumeist an bestimmten Punkten, wie beispielsweise einem Kurbelgehäuse, von welchen das Schmiermittel über wenigstens eine Schmiermittelpumpe wiederum abgesaugt wird und wiederum über den Schmierkreislauf der Motorkomponente zur Schmierung zugeführt wird.

In diesem Schmiermittelkreislauf durchläuft das Schmiermittel, zumeist nachdem es von der Schmiermittelpumpe angesaugt wurde, einen Schmiermittelfilter, in welchem das Schmiermittel von Fremdstoffen befreit wird und zur weiteren Verwendung wieder aufbereitet wird.

Nachteilig an den bekannten Systemen des Standes der Technik ist jedoch, dass aufgrund der begrenzten Bauräume (vor allem in Hinblick auf einspurige Kraftfahrzeuge) die Wege zwischen den einzelnen Komponenten des Schmiermittelversorgungssystems zumeist recht hoch sind, wodurch einerseits ein erhöhter Energieaufwand für die wenigstens eine Schmiermittelpumpe erforderlich ist, die Verlustleistungen, welche durch die langen Leitungssysteme auftreten, ausgleichen muss und/oder das benötigte Ölvolumen zu einem umwelttechnischen Defizit führt.

Ein weiterer Nachteil besteht in der verhältnismäßig langen Anlaufzeit beim Start des Kraftfahrzeuges, da es aufgrund der langen Leitungswege längere Zeitspannen andauern kann, bis die Motorkomponenten mit Schmiermittel versorgt werden (was zu einem erhöhten Verschleiß führt).

Aufgabe der vorliegenden Erfindung ist es daher, ein Schmiermittelversorgungssystem sowie ein Kurbelgehäuse und ein Kraftfahrzeug mit einem solchen Schmiermittelversorgungssystem bereitzustellen, welches die zuvor genannten Nachteile des Standes der Technik zumindest teilweise verbessern und/oder ein kompakter bauendes System und/oder einen effizienteren Betrieb erlauben und/oder eine ökologische und/oder ökonomische Verbesserung darstellen.

Diese Aufgabe wird erfindungsgemäß durch ein Schmiermittelversorgungssystem für ein, insbesondere einspuriges, Kraftfahrzeug mit den Merkmalen des Anspruchs 1, einem Kurbelgehäuse mit einem solchen Schmiermittelversorgungssystem sowie einem Kraftfahrzeug mit einem solchen Schmiermittelversorgungssystem gelöst.

Erfindungsgemäß ist vorgesehen, dass ein Schmiermittelversorgungssystem für ein Kraftfahrzeug folgendes umfasst:
- wenigstens eine Schmiermittelpumpe, welche dazu ausgebildet ist, ein Schmiermittel zur Schmierung von Motorkomponenten in zumindest einem Schmiermittelkreislauf des Kraftfahrzeuges zu fördern und
- optional einen Schmiermittelfilter, welcher dazu ausgebildet ist, das im Schmiermittelkreislauf geförderte Schmiermittel zu filtrieren,
wobei
- der Schmiermittelfilter unmittelbar an die wenigstens eine Schmiermittelpumpe anschließt und/oder
- eine gedachte Fortsetzung einer Pumpenwelle der wenigstens einen Schmiermittelpumpe den Schmiermittelfilter durchsetzt und/oder
- wenigstens zwei Schmiermittelpumpen vorgesehen sind, wobei die wenigstens zwei Schmiermittelpumpen durch eine gemeinsame Pumpenwelle angetrieben sind.

Im Zuge eines ersten Aspektes der Erfindung ist somit vorgesehen, dass der Schmiermittelfilter unmittelbar an der wenigstens einen Schmiermittelpumpe anschließt.

Dies kann so verstanden werden, dass das Gehäuse der wenigstens einen Schmiermittelpumpe und das Gehäuse des Schmiermittelfilters direkt kontaktieren oder sogar durch eine gemeinsame Komponente ausgebildet sind, wodurch sich der Weg, den das Schmiermittel zwischen der wenigstens einen Pumpe und dem Schmiermittelfilter zurücklegen muss, auf ein Minimum verkürzt, wodurch einerseits die Verlustleistung für den gepumpten Weg zwischen der wenigstens einen Schmiermittelpumpe und dem Schmiermittelfilter nahezu eliminiert wird und andererseits das "verlorene" Schmiermittelvolumen durch die Leitung ebenfalls auf ein Minimum reduziert werden kann.

In einem zweiten Aspekt der vorliegenden Erfindung ist es vorgesehen, dass die gedachte Fortsetzung einer Pumpenwelle der wenigstens einen Schmiermittelpumpe dem Schmiermittelfilter durchsetzt.

Auch mit Hilfe dieses zweiten Aspektes lassen sich die Wege des geförderten Schmiermittels zwischen wenigstens einer Schmiermittelpumpe und Schmiermittelfilter durch die Anordnung des Schmiermittelfilters zur wenigstens einen Schmiermittelpumpe auf ein Minimum reduzieren, wodurch wiederum das benötigte Schmiermittelvolumen für die Schmiermittelversorgung als auch die Verlustleistungen für das Bewegen des Schmiermittels in den Schmiermittelleitungen reduziert werden kann.

Im Zuge eines dritten Aspektes sind wenigstens zwei Schmiermittelpumpen vorgesehen, wobei die wenigstens zwei Schmiermittelpumpen durch eine gemeinsame Pumpenwelle angetrieben sind.

In den meisten Schmiermittelversorgungssystemen von Kraftfahrzeugen wird die Schmiermittelversorgung durch wenigstens zwei Schmiermittelpumpen umgesetzt, wobei zumeist eine Saugpumpe und eine Hochdruckpumpe das Schmiermittelsystem unterteilen und jeweils unterschiedliche Komponenten versorgt werden. Im Stand der Technik ist es geläufig, diese zwei Schmiermittelpumpen an separaten Positionen (je nach an zu versorgenden Motorkomponenten) zu positionieren, wobei jedoch auch zwei unterschiedliche Antriebssysteme für die Schmiermittelpumpen erforderlich werden.

Im Zuge des dritten Aspekts der vorliegenden Erfindung kann jedoch ein gemeinsames Antriebssystem mittels einer der wenigstens zwei Schmiermittelpumpen gemeinen Pumpenwelle umgesetzt werden, wodurch über den Verzicht zumindest einer Antriebseinheit der Bauraum wesentlich verringert werden kann und weiters energieeffizienter und effektiver die wenigstens zwei Schmiermittelpumpen angetrieben werden können.

Gemeinsam ist den erwähnten Aspekten der Erfindung, dass ein kompakteres Schmiermittelsystem geschaffen werden kann, das mit geringem Bauraum, insbesondere in einspurigen Fahrzeugen, an gewünschten oder optimalen Stellen des Fahrzeugs (beispielsweise unterhalb einer Kolben-Zylinder-Einheit, einer Kurbelwelle und/oder eines Antriebsgetriebes und/oder quer zur Fahrtrichtung bei einem einspurigen Fahrzeug) verbaut werden kann, ohne längere Leitungswege zu erzeugen.

Durch die effizientere und effektivere Möglichkeit zum Betreiben eines Schmiermittelversorgungssystems sinkt nicht nur der einzuplanende Energieaufwand zum Betreiben eines solchen Systemes, sondern es kann auch bei der Auslegung eines entsprechenden Systemes mit geringeren Mitteln gerechnet werden, wodurch ein geringerer Bauraum, welcher bei den meisten, insbesondre einspurigen, Kraftfahrzeugen ohnehin kontinuierlich zu verringern ist.

Weiters kann natürlich durch die effizientere Nutzung der ökologische als auch der ökonomische Aspekt verbessert werden.

Ein weiterer positiver Aspekt der vorliegenden Erfindung besteht darin, dass durch die kompaktere Bauweise auch die Wege des Schmiermittels verkürzt werden können, wodurch es zu einem verringerten Volumen an Schmiermittel im Schmiermittelversorgungssystem kommt, was wiederum nicht nur den fertigungstechnischen Aufwand zur Herstellung reduziert, sondern auch das benötigte Schmiermittelvolumen während des Betriebs des Kraftfahrzeuges senkt, wobei auch bei den Servicearbeiten - welche mit einem Schmiermittelwechsel verbunden sind - geringere Alt-Schmiermittelvolumina entsorgt werden müssen, womit wiederum nicht nur der ökonomische sondern auch der ökologische Aspekt verbessert werden kann.

Es kann jedoch auch vorgesehen sein, dass durch die Verringerung des Bauvolumens des Schmiermittelsystems das gewonnene Bauvolumen dazu genutzt werden kann, das Schmiermittelvolumen zu erhöhen, wodurch Serviceintervalle erhöht werden können und somit weniger oft ein Schmiermittelwechsel durchgeführt werden muss.

Weiters kann durch die Verringerung des Schmiermittelvolumens und/oder der Verkürzung des Leitungssystems des Schmiermittelversorgungssystems beim Start des Kraftfahrzeuges sehr schnell Schmiermittel an die Motorkomponenten gefördert werden, wodurch sich eine sehr schnelle Schmierung der Motorkomponenten einstellt, was wiederum zu einem verringerten Verschleiß führt und zu einem verringerten Geräuschniveau beim Start des Kraftfahrzeuges.

Dieses verringerte Geräuschniveau beim Start des Kraftfahrzeuges kann darauf zurückgeführt werden, dass beispielsweise ein Kettenspanner, welcher durch das Schmiermittel versorgt werden, innerhalb von wenigen Umdrehungen der Kurbelwelle bereits mit Schmiermittel versorgt werden und sich somit ein geräuscharmer Betrieb des Kraftfahrzeuges einstellt.

Durch die verringerte Bauteilanzahl und die verkürzten Leitungswege des Schmiermittelkreislaufes kann auch der Bearbeitungsaufwand während der Fertigung sowie die Anzahl der Verschlüsse der Leitungen verringert werden, wodurch sich eine Prozesssicherheit während der Fertigung erhöht und das Risiko für Undichtigkeiten im Betrieb des Schmiermittelversorgungssystems erheblich sinkt.

Ein weiterer Vorteil der verringerten Bauteilanzahl besteht in der signifikanten Gewichtsreduktion.

Unter einspurigen Kraftfahrzeugen können beispielsweise Motorräder, Motorroller, Mopeds, Mofas oder des Ähnlichen verstanden werden.

Ein erfindungsgemäßes System muss nicht zwangsläufig durch eine Produktion eines neuen Kraftfahrzeugs erzeugt werden. Ein entsprechendes System kann auch beispielsweise bei bestehenden Kraftfahrzeugen - wie sie beispielsweise in der Beschreibungseinleitung beschrieben wurden - implementiert werden und kann somit nachträglich nachgerüstet werden.

Darunter, dass der Schmiermittelfilter unmittelbar and die wenigstens eine Schmiermittelpumpe anschließt, kann verstanden werden, dass beispielsweise ein Gehäuse der Schmiermittelpumpe ein Gehäuse des Schmiermittelfilter unmittelbar kontaktiert oder durch dasselbe Bauteil gebildet sind.

Darunter, dass eine gedachte Fortsetzung der Pumpenwelle den Schmiermittelfilter durchsetzt, kann verstanden werden, dass beispielsweise eine zylinderförmige gedachte oder virtuelle Fortsetzung der Pumpenwelle den Schmiermittelfilter schneidet oder durchsetzt. Es kann vorgesehen sein, dass die Pumpenwelle und der Schmiermittelfilter koaxiale Längsachse aufweisen.

In bevorzugten Ausführungsformen kann aber ein kleiner Versatz zwischen den Längsachsen der Pumpenwelle und des Schmiermittelfilters vorgesehen sein, beispielsweise um einen leichten und einfach konstruierten Übertritt des Schmiermittels aus der wenigstens einen Pumpe in den Schmiermittelfilter zu gewährleisten.

Darunter, dass eine gemeinsame Pumpenwelle für wenigstens zwei Schmiermittelpumpen vorgesehen ist, kann verstanden werden, dass beispielsweise eine einstückige Welle die Schmiermittelpumpen antreibt. Natürlich kann Pumpenwelle natürlich auch mehrere Bauteile aufweisen, die rotatorisch bewegungsschlüssig - vorzugsweise vollkommen bewegungsschlüssig - miteinander verbunden sind, beispielsweise stoffschlüssig, formschlüssig und/oder reibschlüssig.

Vorteilhafte Ausführungsformen der Erfindung sind in den abhängigen Ansprüchen definiert.

Es kann vorgesehen sein, dass die wenigstens eine Schmiermittelpumpe oder die wenigstens zwei Schmiermittelpumpen eine Zahnradpumpe - vorzugsweise eine Trochoidenpumpe - aufweist oder aufweisen.

Vorzugsweise kann vorgesehen sein, dass das Filtergehäuse des Schmiermittelfilters durch eine Öffnung eines Kurbelgehäuses ausgebildet ist.

Es kann vorgesehen sein, dass die wenigstens eine Schmiermittelpumpe oder die wenigstens zwei Schmiermittelpumpen in einer entsprechenden Öffnung eines Kurbelgehäuses positioniert sind.

Bei der Öffnung kann es sich um ein Sackloch, optional mit einer bodenseitigen Zuführöffnung für Schmiermittel, handeln, wobei das Sackloch im Wesentlich zylindrisch (besonders bevorzugt mit kreisförmiger Grundfläche) ausgebildet ist oder in anderer Art und Weise an eine Form des eigentlichen Filtermaterials angepasst ist.

Vorzugsweise kann vorgesehen sein, dass die wenigstens eine Schmiermittelpumpe und der Schmiermittelfilter durch wenigstens eine Öffnung (siehe oben, Zuführöffnung) - vorzugsweise eine Öffnung eines Kurbelgehäuses, besonders bevorzugt eine Bohrung im Kurbelgehäuse - fluidtechnisch verbunden sind.

Es kann vorgesehen sein, dass die wenigstens eine Schmiermittelpumpe und der Schmiermittelfilter durch wenigstens eine Öffnung eines Kurbelgehäuses verbunden sind, welche Öffnung durch ein zur Herstellung des Kurbelgehäuses verwendetes Gießverfahren bereits umgesetzt wird. Durch die Herstellung der Öffnung im Gießverfahren lassen sich somit - beispielweise - jegliche Art von Querschnittsgeometrien umsetzen.

Durch die Ausbildung des Filtergehäuses als Kurbelgehäuse und die Anordnung der Schmiermittelpumpe oder der wenigstens zwei Schmiermittelpumpen im Kurbelgehäuse kann somit das Kurbelgehäuse ein gemeinsames Gehäuse ausbilden, wodurch lediglich durch eine entsprechende Öffnung des Kurbelgehäuses oder eine Bohrung des Kurbelgehäuses die wenigstens eine Schmiermittelpumpe mit dem Schmiermittelfilter verbunden werden kann, wodurch eine Fluidleitung zwischen Schmiermittelpumpe und Schmiermittelfilter maximal in ihrer Länge auf eine Öffnung reduziert werden kann.

Das Schmiermittel kann vorzugweise durch ein geläufiges Motoröl dargestellt sein.

Es kann vorgesehen sein, dass eine erste Schmiermittelpumpe der wenigstens zwei Schmiermittelpumpen als Saugpumpe und/oder eine zweite Schmiermittelpumpe der wenigstens zwei Schmiermittelpumpen als Hochdruckpumpe ausgebildet ist.

Vorzugsweise kann vorgesehen sein, dass die, vorzugsweise erste, Schmiermittelpumpe dazu ausgebildet ist, das Schmiermittel über einen Zufuhrkanal aus einem Kurbelgehäuse zu saugen.

Vorzugsweise kann vorgesehen sein, dass die, vorzugsweise erste, Schmiermittelpumpe dazu ausgebildet ist, das Schmiermittel in einem in ein Getriebegehäuse führenden ersten Versorgungskanal zu pumpen.

Der erste Versorgungskanal kann beispielsweise ein Niederdruckversorgungskanal sein.

Es kann vorgesehen sein, dass die, vorzugsweise zweite, Schmiermittelpumpe dazu ausgebildet ist, das Schmiermittel über einen Zufuhrkanal aus einem Getriebegehäuse zu saugen.

Vorzugsweise kann vorgesehen sein, dass die, vorzugsweise zweite, Schmiermittelpumpe dazu ausgebildet ist, das Schmiermittel in einen in ein Kurbelgehäuse führenden zweiten Versorgungskanal zu pumpen.

Der zweite Versorgungskanal kann beispielsweise als Hochdruckversorgungskanal ausgebildet sein. Dieser kann zur Schmierung bewegter Komponenten des Kurbelgehäuses, insbesondere des Verbrennungsmotors des Kraftfahrzeugs, verwendet werden, welche vorzugsweise direkt Kontakt mit der Verbrennung haben, wie beispielsweise der Kolben, die Kolbenringe, die Kupplung, der Kettenspanner, der Zylinderkopf, die Kolbenspritzdüsen oder die Kurbelwelle.

Es kann vorgesehen sein, dass die wenigstens eine Schmiermittelpumpe oder die wenigstens zwei Schmiermittelpumpen durch die Pumpenwelle angetrieben wird oder werden, vorzugsweise welche Pumpen - besonders bevorzugt über ein einstufiges und/oder mehrstufiges Zahnradgetriebe - mit einer Kurbelwelle bewegungsgekoppelt ist.

Vorzugweise ist vorgesehen, dass eine Rotationsachse der wenigstens einen Schmiermittelpumpe oder der wenigstens zwei Schmiermittelpumpen einerseits und eine Längsachse des Schmiermittelfilters andererseits (insbesondere unter Berücksichtigung von Fertigungsungenauigkeiten und Montageungenauigkeiten) parallel zueinander ausgerichtet sind.

Weiters wird Schutz begehrt für ein Kurbelgehäuse eines, insbesondere einspurigen, Kraftfahrzeuges mit einem erfindungsgemäßen Schmiermittelversorgungssystem, vorzugsweise wobei das Schmiermittelversorgungssystem unterhalb einer Kolben-Zylinder-Einheit, einer Kurbelwelle und/oder eines Antriebsgetriebes des Kraftfahrzeugs angeordnet ist.

Es kann vorgesehen sein, dass eine Öffnung des Kurbelgehäuses das Gehäuse des Schmiermittelfilters bildet und vorzugsweise ein Schmiermittelfilterdeckel am Kurbelgehäuse das durch den Schmiermittelfilter gefilterte Schmiermittel vom Schmiermittelfilter weiter, besonders bevorzugt in einen zweiten Versorgungskanal des Kurbelgehäuses, leitet. Der Schmiermittelfilterdeckel kann vorzugsweise einen Kanalabschnitt für diese Weiterleitungsfunktion aufweisen.

Vorzugsweise kann vorgesehen sein, dass die, vorzugsweise erste, Schmiermittelpumpe dazu ausgebildet ist, das Schmiermittel über einen Zufuhrkanal aus einem Kurbelgehäuse zu saugen, wobei der Zufuhrkanal im Kurbelgehäuse derart angeordnet ist, dass Schmiermittel durch einen Ölschaber 21 von einer Kurbelwelle direkt an den Zufuhrkanal gefördert wird.

Ebenfalls wird Schutz begehrt für ein Kraftfahrzeug, insbesondere ein einspuriges Kraftfahrzeug, mit einem erfindungsgemäßen Schmiermittelversorgungssystem.

Weitere Einzelheiten und Vorteile der vorliegenden Erfindung werden im Folgenden anhand der Figurenbeschreibung unter Bezugnahme auf die Figuren näher erläutert. Dabei zeigt
- Fig. 1 bis 6: ein erfindungsgemäßes Ausführungsbeispiel eines Schmiermittelversorgungssystems im Einbauzustand in einer Antriebseinheit eines einspurigen Kraftfahrzeugs,
- Fig. 7 bis 10: das Ausführungsbeispiel des Schmiermittelversorgungssystems aus Fig. 1-6 in Isolation,
- Fig. 11 bis 14: ein weiteres Ausführungsbeispiel eines erfindungsgemäßen Schmiermittelversorgungssystems, und
- Fig. 15: ein einspuriges Kraftfahrzeug mit einer erfindungsgemäßen Ausführungsform eines Schmiermittelversorgungssystems.

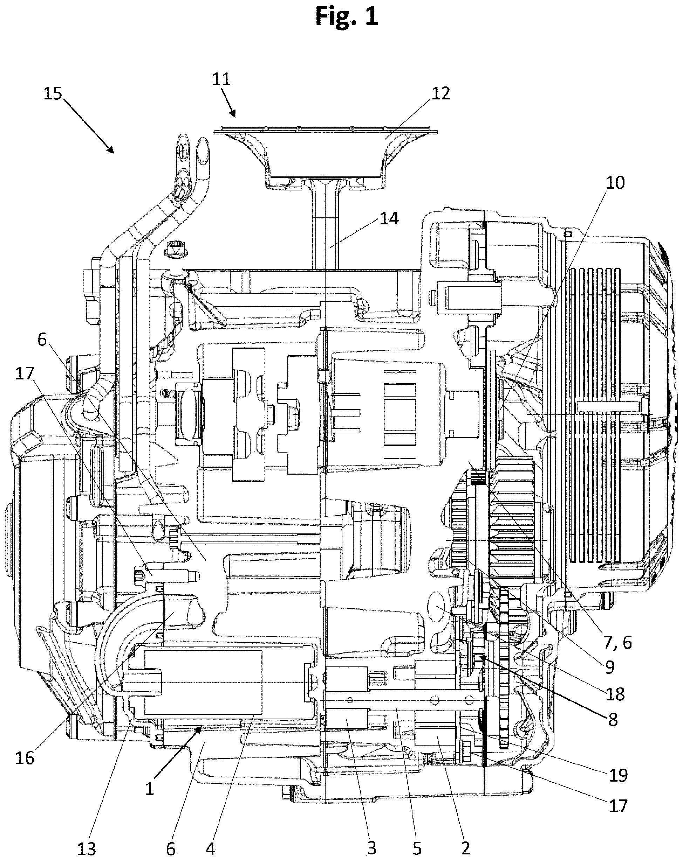

Die Figuren 1 bis 6 zeigen ein erstes erfindungsgemäßes Ausführungsbeispiels eines Schmiermittelversorgungssystems 1 in einem Einbauzustand in einer Antriebseinheit 15 eines einspurigen Kraftfahrzeuges 20, wobei in Fig. 1 ein Schnitt durch die gesamte Antriebseinheit 15 dargestellt ist, in welchem Schnitt das Schmiermittelversorgungssystem 1 ersichtlich ist.

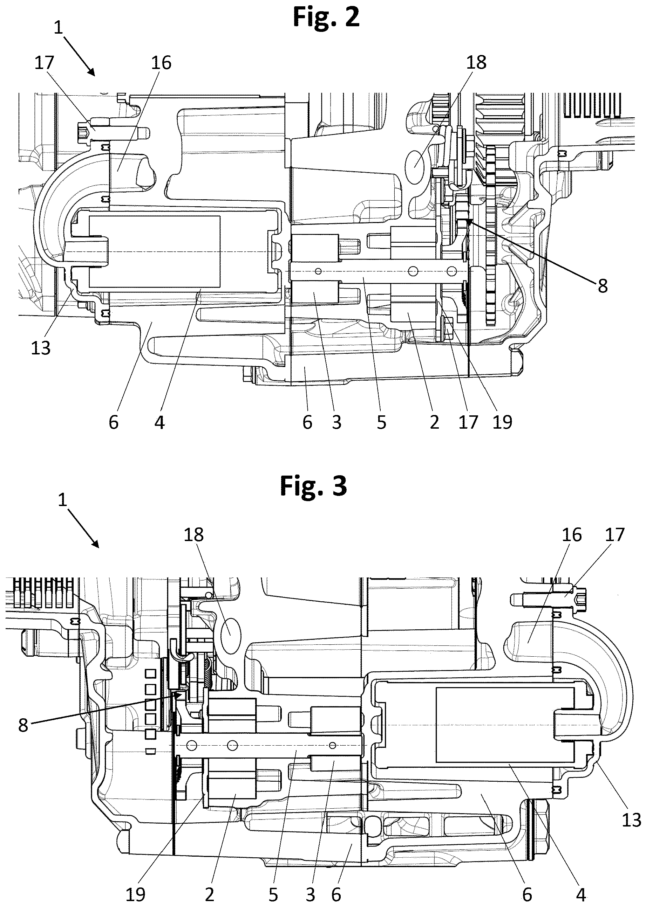

In Fig. 2 ist eine Detailansicht des Schmiermittelversorgungssystems 1 aus Fig. 1 dargestellt.

Fig. 3 zeigt eine Ansicht desselben Schnitts wie in den Figuren 1 und 2, jedoch aus der gegenüberliegenden Ansichtsrichtung.

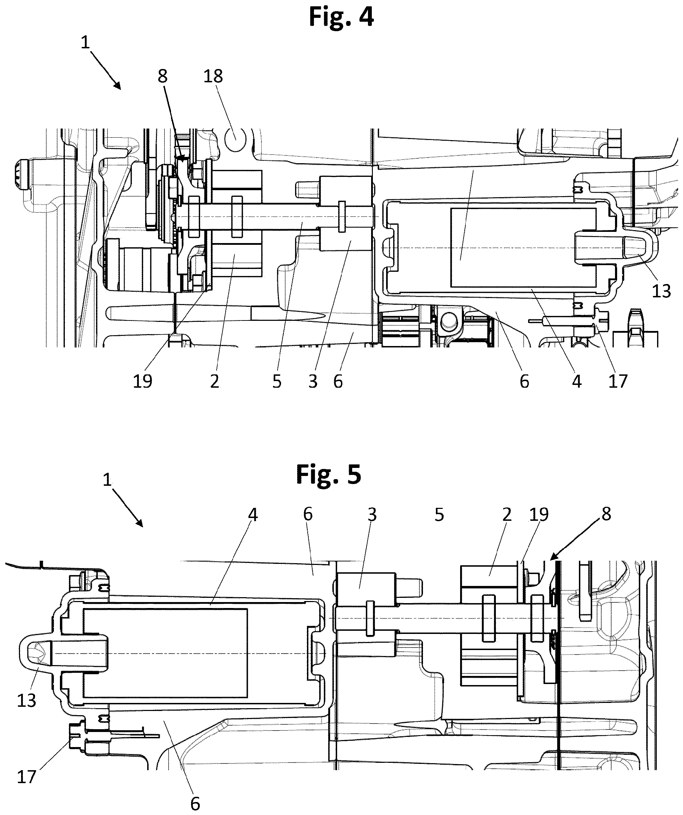

Die Figuren 4 und 5 zeigen weitere Schnittdarstellungen des Ausführungsbeispiels der Figuren 1 bis 3 des ersten Ausführungsbeispiels eines Schmiermittelversorgungssystems 1, wobei Fig. 4 eine Schnittebene normal zu den Figuren 1 bis 3 darstellt, wobei die Ansicht von unten gezeigt ist und Fig. 5 dieselbe Schnittebene wie Fig. 4 zeigt, jedoch eine Ansicht von oben.

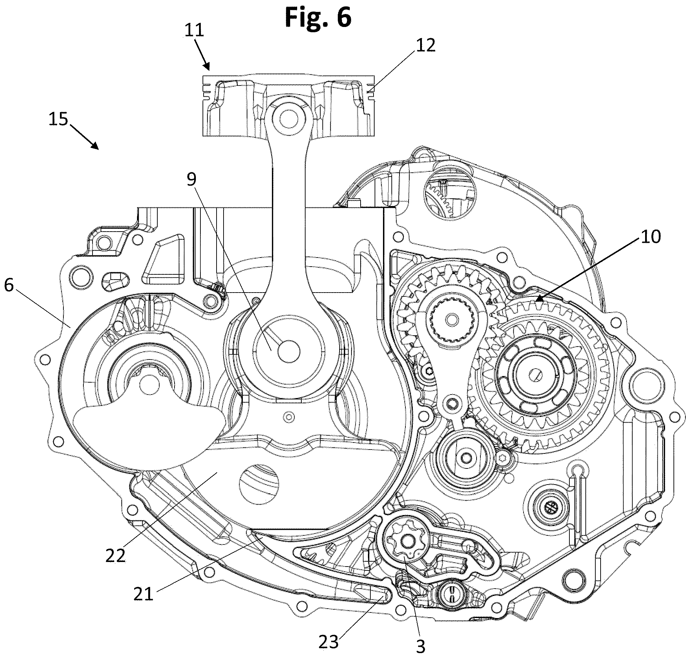

Fig. 6 zeigt eine Schnittdarstellung normal zu den Darstellungen der Figuren 1 bis 5.

Es geht aus den Figuren 1 bis 6 hervor, dass das Schmiermittelversorgungssystem 1 zwei Schmiermittelpumpen 2, 3 aufweist, welche durch eine gemeinsame Pumpenwelle 4 angetrieben sind.

Die Schmiermittelpumpen 2, 3 sind in diesem Ausführungsbeispiel als Zahnradpumpen - genau genommen: Trochoidenpumpen - umgesetzt, wobei das Innere Trochoidenpumpenrad durch eine Rotation der Pumpenwelle 5 angetrieben wird.

Die Pumpenwelle 5 wird wiederum über ein mehrstufiges Zahnradgetriebe 8, welches direkt mit der Kurbelwelle 9 bewegungsgekoppelt ist, angetrieben.

Die in diesem Ausführungsbeispiel gezeigte Antriebseinheit 15 für das einspurige Kraftfahrzeug 20 ist durch einen Verbrennungsmotor umgesetzt, welcher über eine Kolben-Zylinder-Einheit 11 verfügt (aus Gründen der Übersichtlichkeit nicht zur Gänze dargestellt), wobei der Kolben 12 - geschnitten dargestellt - der Kolben-Zylinder-Einheit 11 über das Pleuel 14 in bekannter Art und Weise an der Kurbelwelle 9 angebunden ist.

Die erste Schmiermittelpumpe 2 dieses Ausführungsbeispiels ist als Saugpumpe umgesetzt, wobei durch diese erste Schmiermittelpumpe 2 Schmiermittel direkt aus dem Kurbelgehäuse 6 abgesaugt wird, nachdem das Schmiermittel beispielsweise über einen Ölschaber 21 von der Kurbelwelle 9 - genau genommen: von einem Kolbengewicht 22 der Kurbelwelle 9 - abgeschabt wurde.

Vorteilhafterweise kann dabei vorgesehen sein, dass der Zufuhrkanal der ersten Schmiermittelpumpe 2 dabei im Kurbelgehäuse 6 an einer Position 23 abzweigt, an welche das Schmiermittel durch den Ölschaber 21 und die Bewegung der Kurbelwelle 9 gefördert wird (siehe hierzu Fig. 6).

Nachdem das Schmiermittel von der ersten Schmiermittelpumpe 2 über den Zufuhrkanal aus dem Kurbelgehäuse 6 abgesaugt wurde, wird dieses von der ersten Schmiermittelpumpe 2 weiter über den Versorgungskanal 18 in das Getriebegehäuse 7 gefördert.

Dieses Getriebegehäuse 7 ist in diesem Ausführungsbeispiel einteilig mit dem Kurbelgehäuse 6 umgesetzt.

Kommend vom Versorgungskanal 18 wird das Schmiermittel von "oben" über das Antriebsgetriebe 10 des einspurigen Kraftfahrzeugs 20 freigesetzt, wobei das Schmiermittel durch die Gewichtskraft über das Antriebsgetriebe 10 hinabrinnt und somit das Antriebsgetriebe 10 schmiert.

Anschließend sammelt sich das Schmiermittel wiederum in einem unteren Bereich des Getriebegehäuses 7, von welchem das Schmiermittel über einen Zufuhrkanal aus dem Getriebegehäuse 7 durch die zweite Schmiermittelpumpe 3 - welche als Hochdruckpumpe ausgebildet ist - abgesaugt wird.

Das durch die zweite Schmiermittelpumpe 3 aus dem Getriebegehäuse 7 geförderte und unter Druck gesetzte Schmiermittel wird anschließend durch die zweite Schmiermittelpumpe 3 in einen unmittelbar an die zweite Schmiermittelpumpe 3 anschließenden Schmiermittelfilter 4 gefördert, durch welchen das Schmiermittel gefiltert, von Verunreinigungen bereinigt und aufbereitet wird.

Der Schmiermittelfilter 4 ist dabei dermaßen angeordnet, dass dieser durch eine gedachte Fortsetzung der Pumpenwelle 5 durchsetzt wird.

Es ist zu erkennen, dass durch diese Ausgestaltung der Förderweg zwischen zweiter Schmiermittelpumpe 3 und Schmiermittelfilter 4 auf ein Minimum reduziert werden kann.

Durch diese Verkürzung kann der Schmiermittelkreislauf sehr kurz gehalten werden, wodurch das Schmiermittel schnell und mit geringem Verlust zu den zu schmierenden Motorkomponenten gefördert werden kann.

Dies führt zu einer Energieersparnis, da nur sehr geringe Druckverluste auftauchen.

Weiters kann Schmiermittelvolumen eingespart werden und es kann beim Start der Antriebseinheit 15 sehr schnell Schmiermittel an die Motorkomponenten gefördert werden, wodurch sich eine sehr schnelle Schmierung der Motorkomponenten einstellt, was wiederum zu einem verringerten Verschleiß führt und zu einem verringerten Geräuschniveau beim Start der Antriebseinheit 15.

Dieses verringerte Geräuschniveau beim Start der Antriebseinheit 15 kann darauf zurückgeführt werden, dass beispielsweise ein Kettenspanner, welcher durch das Schmiermittel geschmiert wird, innerhalb von wenigen Umdrehungen der Kurbelwelle 9 bereits mit Schmiermittel versorgt wird und sich somit ein geräuscharmer Betrieb der Antriebseinheit 15 einstellt.

Nach der Filtration durch den Schmiermittelfilter 4 wird das durch die zweite Schmiermittelpumpe 3 unter Druck versetzte und geförderte Schmiermittel über den Schmiermittelfilterdeckel 13 in einen zweiten Versorgungskanal 16 gepumpt.

Hervorzuheben ist die spezifische, geometrische Ausgestaltung des Schmiermittelfilterdeckels 13, durch dessen Ausgestaltung es ermöglicht wird, den Bauraum weiter zu reduzieren, da der Schmiermittelfilterdeckel 13 einen Teil des Schmiermittelkreislaufes darstellt und den Schmiermittelfluss nach Durchlaufen des Schmiermittelfilters 4 in den zweiten Versorgungskanal lenkt.

Weiters kann durch die spezifisch dargestellte Ausgestaltung des Schmiermittelfilterdeckels 13 der Strom des Schmiermittels besonders strömungsoptimiert werden.

Der zweite Versorgungskanal 16 versorgt unterschiedliche Motorkomponenten der Antriebseinheit 15, welche durch das Schmiermittel in ihrer Bewegung während des Betriebs der Antriebseinheit 15 geschmiert werden oder durch einen Schmiermitteldruck versorgt werden.

Solche Motorkomponenten, welche durch den zweiten Versorgungskanal 16 versorgt werden, sind beispielsweise die Kolben-Zylinder-Einheit 11, eine Kupplung, ein Kettenspanner, eine Kurbelwelle, ein Zylinderkopf, eine Kolbeneinspritzdüse usw.

Nach seinem Einsatz zur Schmierung der Motorkomponenten sammelt sich das Schmiermittel wiederum im Kurbelgehäuse 6 und wird durch die erste Schmiermittelpumpe 2 und ihrer Zuführleitung wiederum aus dem Kurbelgehäuse 6 gesaugt und dem Getriebegehäuse 7 zur Schmierung des Antriebsgetriebes 10 zugeführt.

Wie durch die Figuren 1 bis 6 ersichtlich ist, ist das Filtergehäuse des Schmiermittelfilters 4 durch das Kurbelgehäuse 6 ausgebildet.

Auch die Schmiermittelpumpen 2, 3 sind in entsprechenden Öffnungen des Kurbelgehäuses 6 positioniert.

Die Versorgungsleitungen, Zuführleitungen als auch Verbindungsleitungen (beispielsweise der zweiten Schmiermittelpumpe 3 zum Schmiermittelfilter 4) sind durch entsprechende Öffnungen, Bohrungen und Kanäle des Kurbelgehäuses 6 ausgebildet.

Durch die Umsetzung des Schmiermittelversorgungssystems 1 in einer im Wesentlichen linearen Anordnung kann der Bauraum des Schmiermittelversorgungssystems wesentlich minimiert werden, was es wie aus den Figuren 1 bis 6 hervorgeht.

Durch diese Verkleinerung wird es ermöglicht, das Schmiermittelversorgungssystem 1 quer zu einer Fahrtrichtung eines einspurigen Kraftfahrzeuges 20 anzuordnen.

Ein weiterer Vorteil dieses minimierten Bauraums besteht darin, dass das Schmiermittelversorgungssystem 1 unterhalb der Motorkomponenten nahezu am untersten Ende der Antriebseinheit 15 positioniert werden kann, wodurch sich eine Saughöhe des Schmiermittels aus dem Kurbelgehäuse 6 zur ersten Schmiermittelpumpe 2 oder zur zweiten Schmiermittelpumpe 3 verringert, wodurch sich wiederum die Antriebsleistung des Schmiermittelversorgungssystems 1 reduziert und sich die Volumina der Leitungen sowie die Wege, welche das Schmiermittel zurücklegen muss, verkleinern.

Weiters ergibt sich die Möglichkeit, durch die spezifische Positionierung des Schmiermittelfilters 4 direkt angrenzend an die Schmiermittelpumpe 3, dass die Übergabe des Schmiermittels auf kürzestem Weg mit einem sehr hohen Anströmungsquerschnitt zum Schmiermittelfilter 4 durchgeführt werden kann.

Ein weiterer Vorteil dieser spezifischen Positionierung besteht darin, dass auch die Versorgungskanäle 16, 18 der Motorkomponenten 9, 10, 11, 12, 14 durch eine oder mehrere zentrale Versorgungsbohrungen umgesetzt werden können, welche verhältnismäßig mit geringen Längen umgesetzt werden können, was wiederum zu verkürzten Versorgungswegen führt.

Durch die Verkürzung der Leitungswege des Schmiermittelkreislaufs gelangt das Schmiermittel schnell und mit geringen Verlusten zu den Verbrauchern.

Der Druckaufbau gelingt in sehr kurzer Zeit, wodurch ein Druckaufbau schneller hergestellt werden kann und wodurch sich wiederum der Verschleiß der Bauteile reduziert.

Auch das Schmiermittelvolumina und die Bauteilanzahl kann gesenkt werden, wodurch sich eine signifikante Gewichtsreduzierung einstellt.

Durch die verringerte Bauteilanzahl und die verkürzten Leitungswege des Schmiermittelkreislaufes kann auch der Bearbeitungsaufwand bei der Fertigung sowie die Anzahl der Verschlüsse der Leitungen verringert werden, wodurch sich eine Prozesssicherheit während der Fertigung erhöht und das Risiko für Undichtigkeiten im Betrieb des Schmiermittelversorgungssystems 1 erheblich sinkt.

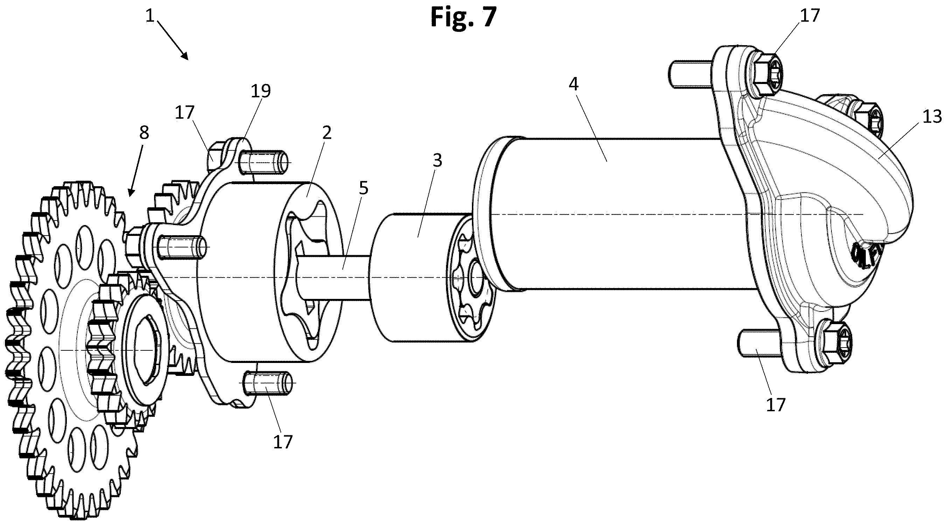

Die Figuren 7 bis 10 zeigen das Ausführungsbeispiel des Schmiermittelversorgungssystems 1 aus den Figuren 1 bis 6 in Isolation.

Dabei ist in Fig. 7 eine perspektivische Ansicht des mehrstufigen Zahnradgetriebes 8, der daran angeschlossenen Pumpenwelle 5, der Schmiermittelpumpen 2, 3, des Schmiermittelfilters 4 und des Schmiermittelfilterdeckels 13 gezeigt.

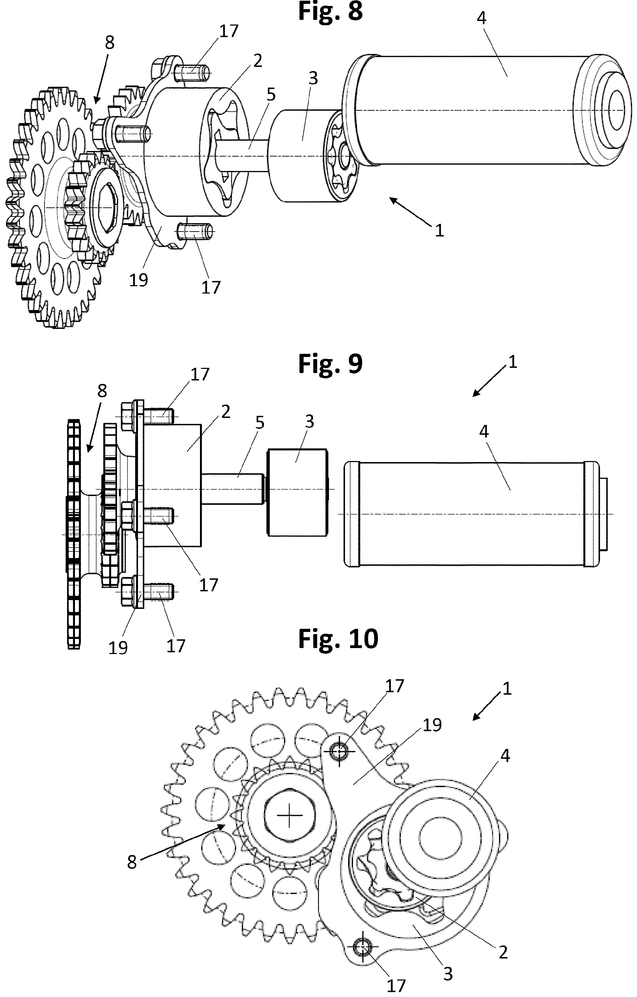

Fig. 8 zeigt eine weitere perspektivische Ansicht dieser Komponenten, wobei jedoch der Schmiermittelfilterdeckel 13 nicht dargestellt ist, um die Übersichtlichkeit zu erhöhen.

Durch die Figuren 9 und 10 sind projizierende Ansichten der Fig. 8 dargestellt.

Es ist zu erkennen, dass der Schmiermittelfilter 4 und die Pumpeneinheit mit den Schmiermittelpumpen 2, 3 gesonderte Bauteile darstellen, welche von gegenüberliegenden Seiten in das Kurbelgehäuse 6, 7 eingeschoben werden.

Hierfür wird der Schmiermittelfilter 4 in eine entsprechende Öffnung des Kurbelgehäuses 6 geschoben, wobei diese Öffnung über den Schmiermittelfilterdeckel 13 verschlossen wird.

Der Schmiermittelfilterdeckel 13 ist über die Schraubenverbindung 17 direkt am Kurbelgehäuse 6 angeordnet und dient darüber hinaus zur Lagesicherung und Positionierung des Schmiermittelfilters 4.

In ähnlicher Art und Weise wird auch die Pumpeneinheit, bestehend aus der Pumpenwelle 5, der ersten Schmiermittelpumpe 2 und der zweiten Schmiermittelpumpe 3 in eine entsprechende Öffnung des Kurbelgehäuses 6 eingeschoben und über den Pumpenverschlussdeckel 19 abgeschlossen und positioniert.

Dieser Pumpenverschlussdeckel 19 wird wiederum über die Schraubenverbindungen 17 direkt mit dem Kurbelgehäuse 6 verschraubt.

An der Außenseite des Pumpenverschlussdeckels 19 wird die Pumpenwelle 5 über das mehrstufige Zahnradgetriebe 8 mit der Kurbelwelle 9 rotatorisch, bewegungsschlüssig verbunden.

Die fluide Verbindung der zweiten Schmiermittelpumpe 3 und des Schmiermittelfilters 4 wird durch eine entsprechende Öffnung im Kurbelgehäuse 6 umgesetzt.

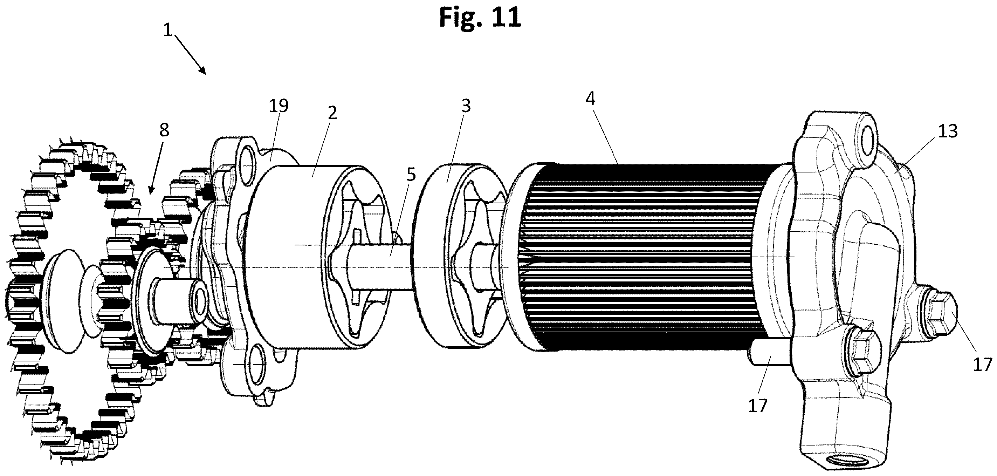

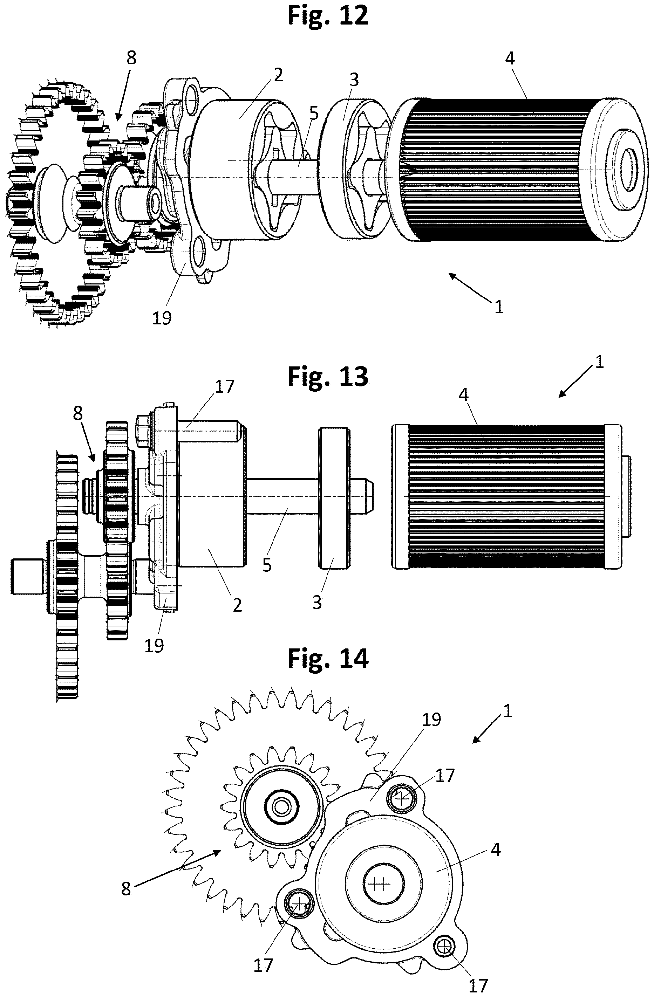

Die Figuren 11 bis 14 zeigen ein weiteres Ausführungsbeispiel eines Schmiermittelversorgungssystems 1, wobei wiederum Fig. 11 eine perspektivische Ansicht mit Schmiermittelfilterdeckel 13 darstellt, Fig. 12 eine perspektivische Ansicht ohne Schmiermittelfilterdeckel 13 und die Figuren 13 und 14 projizierende Ansichten der Figur 12.

Das durch die Figuren 11 bis 14 dargestellte Ausführungsbeispiel des Schmiermittelversorgungssystems ähnelt im Wesentlichen dem vorausgehenden, jedoch unterscheidet sich dieses weitere Ausführungsbeispiel durch die Dimensionierungen der Schmiermittelpumpen 2, 3, des Schmiermittelfilters 4, des mehrstufigen Zahnradgetriebes 8 sowie der geometrischen Gestalt des Schmiermittelfilterdeckels 13.

Dennoch ist die Funktionsweise des weiteren Ausführungsbeispiels der Figuren 11 bis 14 des Schmiermittelversorgungssystems 1 im Wesentlichen dieselbe, wie das des Schmiermittelversorgungssystems, welches durch die Figuren 1 bis 10 erläutert wurde.

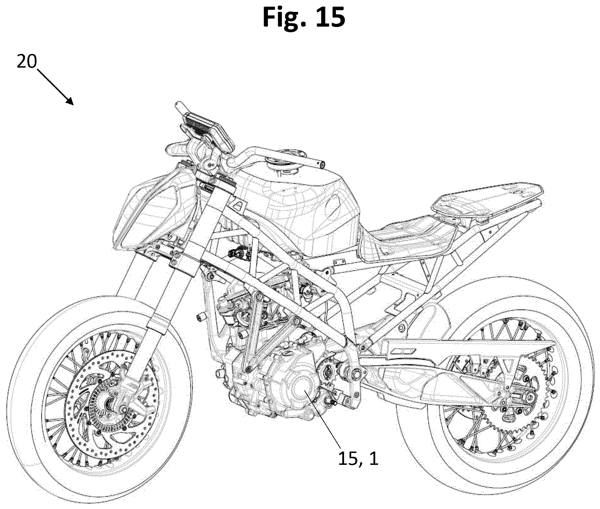

Figur 15 zeigt ein einspuriges Kraftfahrzeug 20 mit einer als Verbrennungsmotor ausgebildeten Antriebseinheit 15, wobei die Antriebseinheit 15 eine erfindungsgemäße Ausführungsform eines Schmiermittelversorgungssystems 1 aufweist.

### Bezugszeichenliste

- 1: Schmiermittelversorgungssystem
- 2: erste Schmiermittelpumpe (Saugpumpe)
- 3: zweite Schmiermittelpumpe (Hochdruckpumpe)
- 4: Schmiermittelfilter
- 5: Pumpenwelle
- 6: Kurbelgehäuse
- 7: Getriebegehäuse
- 8: mehrstufiges Zahnradgetriebe
- 9: Kurbelwelle
- 10: Antriebsgetriebe
- 11: Kolben-Zylinder-Einheit
- 12: Kolben
- 13: Schmiermittelfilterdeckel
- 14: Pleuel
- 15: Antriebseinheit für einspuriges Kraftfahrzeug
- 16: zweiter Versorgungskanal
- 17: Schraubverbindung
- 18: Versorgungskanal
- 19: Pumpenverschlussdeckel
- 20: Kraftfahrzeug
- 21: Ölschaber
- 22: Kolbengewicht
- 23: Position

## Patentansprüche

1. Schmiermittelversorgungssystem für ein, insbesondere einspuriges, Kraftfahrzeug (20), umfassend
- wenigstens eine Schmiermittelpumpe (2, 3), welche dazu ausgebildet ist, ein Schmiermittel zur Schmierung von Motorkomponenten (9, 10, 11, 12, 14) in zumindest einem Schmiermittelkreislauf des Kraftfahrzeuges (20) zu fördern und
- optional einen Schmiermittelfilter (4), welcher dazu ausgebildet ist, das im Schmiermittelkreislauf geförderte Schmiermittel zu filtrieren,
**dadurch gekennzeichnet, dass**
- der Schmiermittelfilter (4) unmittelbar an die wenigstens eine Schmiermittelpumpe (2, 3) anschließt und/oder
- eine gedachte Fortsetzung einer Pumpenwelle (5) der wenigstens einen Schmiermittelpumpe (2, 3) den Schmiermittelfilter (4) durchsetzt und/oder
- wenigstens zwei Schmiermittelpumpen (2, 3) vorgesehen sind, wobei die wenigstens zwei Schmiermittelpumpen (2, 3) durch eine gemeinsame Pumpenwelle (5) angetrieben sind.

2. Schmiermittelversorgungssystem nach Anspruch 1, wobei die wenigstens eine Schmiermittelpumpe (2, 3) oder die wenigstens zwei Schmiermittelpumpen (2, 3) eine Zahnradpumpe, vorzugsweise eine Trochoidenpumpe, aufweist oder aufweisen.

3. Schmiermittelversorgungssystem nach einem der vorhergehenden Ansprüche, wobei das Filtergehäuse des Schmiermittelfilters (4) durch eine Öffnung eines Kurbelgehäuses (6) ausgebildet ist.

4. Schmiermittelversorgungssystem nach einem der vorhergehenden Ansprüche, wobei die wenigstens eine Schmiermittelpumpe (2, 3) oder die wenigstens zwei Schmiermittelpumpen (2, 3) in einer entsprechenden Öffnung eines Kurbelgehäuses (6) positioniert sind.

5. Schmiermittelversorgungssystem nach einem der vorhergehenden Ansprüche, wobei die wenigstens eine Schmiermittelpumpe (2, 3) und der Schmiermittelfilter (4) durch wenigstens eine Öffnung, vorzugsweise eine Öffnung eines Kurbelgehäuses (6), besonders bevorzugt eine Bohrung im Kurbelgehäuse (6), fluidtechnisch verbunden sind.

6. Schmiermittelversorgungssystem nach wenigstens einem der vorhergehenden Ansprüche, wobei eine erste Schmiermittelpumpe (2) der wenigstens zwei Schmiermittelpumpen (2, 3) als Saugpumpe und/oder eine zweite Schmiermittelpumpe (3) der wenigstens zwei Schmiermittelpumpen (2, 3) als Hochdruckpumpe ausgebildet ist.

7. Schmiermittelversorgungssystem nach wenigstens einem der vorhergehenden Ansprüche, wobei die, vorzugweise erste, Schmiermittelpumpe (2) dazu ausgebildet ist, das Schmiermittel über einen Zufuhrkanal aus einem Kurbelgehäuse (6) zu saugen.

8. Schmiermittelversorgungssystem nach wenigstens einem der vorhergehenden Ansprüche, wobei die, vorzugsweise erste, Schmiermittelpumpe (2) dazu ausgebildet ist, das Schmiermittel in einen in ein Getriebegehäuse (7) führenden ersten Versorgungskanal (18) zu pumpen.

9. Schmiermittelversorgungssystem nach wenigstens einem der vorhergehenden Ansprüche, wobei die, vorzugsweise zweite, Schmiermittelpumpe (3) dazu ausgebildet ist, das Schmiermittel über einen Zufuhrkanal aus einem Getriebegehäuse (7) zu saugen.

10. Schmiermittelversorgungssystem nach wenigstens einem der vorhergehenden Ansprüche, wobei die, vorzugsweise zweite, Schmiermittelpumpe (3) dazu ausgebildet ist, das Schmiermittel in einen in ein Kurbelgehäuse (6) führenden zweiten Versorgungskanal (16) zu pumpen.

11. Schmiermittelversorgungssystem nach wenigstens einem der vorhergehenden Ansprüche, wobei die wenigstens eine Schmiermittelpumpe (2, 3) oder die wenigstens zwei Schmiermittelpumpen (2, 3) durch die Pumpenwelle (5) angetrieben wird oder werden, vorzugsweise welche Pumpenwelle (5) - besonders bevorzugt über ein einstufiges Zahnradgetriebe (8) - mit einer Kurbelwelle (9) bewegungsgekoppelt ist.

12. Kurbelgehäuse eines, insbesondere einspurigen, Kraftfahrzeugs (20) mit einem Schmiermittelversorgungssystem (1) nach wenigstens einem der vorhergehenden Ansprüche, vorzugsweise wobei das Schmiermittelversorgungssystem (1) unterhalb einer Kolben-Zylinder-Einheit (11), einer Kurbelwelle (9) und/oder eines Antriebsgetriebes (10) des Kraftfahrzeuges (20) angeordnet ist.

13. Kurbelgehäuse nach Anspruch 12, wobei eine Öffnung des Kurbelgehäuses (6) das Gehäuse des Schmiermittelfilters (4) bildet und vorzugsweise ein Schmiermittelfilterdeckel (13) am Kurbelgehäuse (6) das durch den Schmiermittelfilter (4) gefilterte Schmiermittel vom Schmiermittelfilter (4) weiter, besonders bevorzugt in einen zweiten Versorgungskanal (16) des Kurbelgehäuses (6), leitet.

14. Kurbelgehäuse nach Anspruch 12 oder 13, wobei die, vorzugweise erste, Schmiermittelpumpe (2) dazu ausgebildet ist, das Schmiermittel über einen Zufuhrkanal aus einem Kurbelgehäuse (6) zu saugen, wobei der Zufuhrkanal im Kurbelgehäuse (6) derart angeordnet ist, dass Schmiermittel durch einen Ölschaber (21) von einer Kurbelwelle (9) direkt an den Zufuhrkanal gefördert wird.

15. Kraftfahrzeug, insbesondere einspuriges Kraftfahrzeug (20), mit einem Schmiermittelversorgungssystem (1) nach wenigstens einem der Ansprüche 1 bis 11.
